# EUROPEAN PATENT SPECIFICATION

(11) **EP 4 043 726 B1**
(45) Date of publication and mention of the grant of the patent: **15.07.2026**
(21) Application number: 20883027.3
(22) Date of filing: 09.06.2020
(51) Int. Cl.: F03D 80/40, F03D 80/55, F03D 80/60, B01D 53/26

(54) **AIR COOLING SYSTEM, WIND TURBINE GENERATOR UNIT AND COOLING METHOD THEREFOR**
LUFTKÜHLSYSTEM, WINDTURBINENGENERATOREINHEIT UND KÜHLVERFAHREN DAFÜR
SYSTÈME DE REFROIDISSEMENT D'AIR, UNITÉ DE GÉNÉRATEUR ÉOLIEN ET SON PROCÉDÉ DE REFROIDISSEMENT

(30) Priority: 01.11.2019 CN 201911060745
(43) Date of publication of application: 17.08.2022
(73) Proprietor: Goldwind Science & Technology Co., Ltd., Urumqi, Xinjiang 830026 (CN)
(72) Inventor: BAI, Luolin, Beijing 100176 (CN); SØRENSEN, Peter Hessellund, Beijing 100176 (CN); ZHANG, Jingyi, Beijing 100176 (CN)
(74) Representative: Vossius & Partner Patentanwälte Rechtsanwälte mbB
(86) International application number: PCT/CN2020/095086
(87) International publication number: WO 2021/082456

(56) References cited:
- EP-A1- 3 222 849
- EP-A1- 3 279 469
- EP-A1- 3 485 163
- EP-A2- 2 565 446
- CN-A- 105 736 258
- CN-A- 105 736 258
- CN-A- 108 894 934
- CN-A- 109 642 553
- CN-A- 109 642 553
- CN-A- 110 725 779
- CN-U- 206 329 458

## Description

### TECHNICAL FIELD

The present disclosure relates to a technical field of cooling, and specifically relates to an air cooling system, a wind turbine generator, and a cooling method therefor.

### BACKGROUND

Wind power generation is one of the renewable energy technologies closet to commercialization and is the focus of renewable energy development. The motor in the wind turbine generator suffers from heat loss during operation, which mainly includes: an electromagnetic loss, that is, the Joule heat generated by ohmic impedance in the winding, also referred as a copper loss; a hysteresis loss and an eddy current loss in the iron core and the like, also referred as an iron loss; and inevitable stray loss; in the case of a permanent magnet motor, the heat loss further includes a loss of magnetic steel. These losses cause the motor to release a large amount of heat during operation, and the heat will not only cause a certain impact on the motor itself and its insulation structure, resulting in shortened insulation life or even insulation failure, but also lead to the continuous decline of the output power of the motor.

With the rapid development of the wind turbine generator, the unit capacity of the wind turbine generator is increasing, the losses of wind turbine generator is increasing, and the design of cooling system is becoming more and more important. Especially, when the wind turbine generator is in a harsh environment such as windy and dusty, humid and low temperature, high salt and so on, the requirement for the function of the cooling system are stricter.

The document EP2565446 disclose an energy efficient climate control system for an offshore wind turbine that is integrated with the component cooling system. The climate control system includes a cooling circuit adapted to carry heat generated by a component of the nacelle to outside the nacelle. The climate control system also includes an airflow system adapted to receive a warm outflow of coolant from the cooling circuit, across a variable flow control valve, the airflow system supplying clean ambient air to the nacelle at a predetermined relative humidity. The variable flow control valve regulates a flow rate of the coolant through the airflow system to adjust the relative humidity of the air entering the nacelle.

The document EP3485163 discloses an arrangement for cooling a generator mounted in a nacelle of a wind turbine, the arrangement comprising: a cooling air inlet at an outer wall of the nacelle for introducing cooling air into a space region inside the nacelle; an inlet fan downstream the cooling air inlet configured to pressurize the introduced cooling air within the space region; a filter system downstream the inlet fan and separating the space region from another space region inside the nacelle, the other space region being in communication with generator portions to be cooled; a duct system adapted to guide a portion of cooling air heated by exchange of heat from the generator portions to the cooling air into the space region.

The document EP322849 discloses a method for cooling, deicing and cleaning a wind turbine comprising an inner volume where a flow of air is circulated by means of at least one ventilator, the flow of air entering or exiting the inner volume through at least one air filter, the method comprising the steps of: operating the ventilator according to a first sense of rotation for generating a flow of air entering the inner volume through the at least one air filter, inverting the sense of rotation of the ventilator for generating a flow of air exiting the inner volume through the at least one air filter, maintaining the inverted sense of rotation of the ventilator for an interval of time.

### SUMMARY

The object of the present disclosure is to provide an air cooling system, a wind turbine generator, and a cooling method thereof, and the air cooling system can realize multiple functions including cooling.

In one aspect, the present application proposes an air cooling system, for communicating a nacelle of a wind turbine generator with a generator, including at least two or more subsystems which operate independently, and each of the subsystems includes: a dehumidification device, disposed on a wall of the nacelle and in communication with the nacelle; and a driving device, disposed in the nacelle so that external cooling air is introduced into the nacelle through the dehumidification device, is mixed with a part of high-temperature air discharged from an air outlet of the generator, and exchanges heat with a heat-generating component in the nacelle and/or the generator, wherein the driving devices of the two or more subsystems operate simultaneously for implementing a first function on the wind turbine generator; and the driving devices of the two or more subsystems operate alternately for a predetermined time respectively for implementing a second function on the wind turbine generator.

In another aspect, the present application also proposes a wind turbine generator, including: a generator; a nacelle, connected to the generator; and any one air cooling system described above.

In another aspect, the present application proposes a cooling method for the wind turbine generator described above, comprising: obtaining information about operation instruction, the operation instruction comprising a first instruction and a second instruction; starting, when the first instruction is obtained, driving devices of N subsystems simultaneously, so as to implement a first function on the wind turbine generator, where N≥2; and making, when the second instruction is obtained, the driving devices of the N subsystems operate alternately for a predetermined time respectively, so as to implement a second function on the wind turbine generator.

In the air cooling system and the wind turbine generator provided by the present application, the first function can be implemented on the wind turbine generator by disposing the two or more subsystems, which operate independently, between the nacelle of the wind turbine generator and the air inlet of the generator and making the driving devices of the two or more subsystems operate simultaneously; and the driving devices of the two or more subsystems operate alternately for a predetermined time, respectively, so as to implement the second function on the wind turbine generator, thereby making full use of the waste heat of the generator, coordinating the two subsystems, and expanding the functionality of the air cooling system. In addition, the two or more subsystems operate independently, and when one subsystem fails, the operation of the other subsystem will not be affected, thus improving the fault tolerance and reliability of the air cooling system; and the air cooling system has high cooling efficiency and a simple and compact structure, occupies a small space, has low cost, and is easy to be maintained. Moreover, the cooling method for the wind turbine generator provided by the present application can realize different functions according to received different instructions and improve the reliability of the wind turbine generator.

### BRIEF DESCRIPTION OF THE DRAWINGS

The present application can be better understood from the following description of the specific embodiments of the present application in conjunction with the accompanying drawings; herein, by reading the following detailed description of non-limiting embodiments with reference to the accompanying drawings, other features, objects, and advantages of the present application will become more apparent, and the same or similar reference signs indicate the same or similar features.
FIG. 1 is a schematic structural diagram of an air cooling system provided by an embodiment of the present application;
FIG. 2 is a schematic structural diagram of a pipe layout in a nacelle of the air cooling system shown in FIG. 1;
FIG. 3 is a schematic structural diagram of another air cooling system provided by an embodiment of the present application;
FIG. 4 is a schematic structural diagram of another air cooling system provided by an embodiment of the present application;
FIG. 5 is a schematic structural diagram of a pipe layout in a nacelle of the air cooling system shown in FIG. 4;
FIG. 6 is a schematic structural diagram of another air cooling system provided by an embodiment of the present application; and
FIG. 7 is a block flow diagram of a cooling method for a wind turbine generator according to an embodiment of the present application.

Description of reference numbers:
M-generator; C-nacelle; In-air inlet; O-air outlet; A-auxiliary air outlet; S-subsystem; F-filter; C1-first cavity; C2- second cavity;
1-first pipe; 11-first end; 12-second end;
2-dehumidification device; 3-driving device; 4-second pipe; 41-sub-pipe; 42-first circulating fan;
5-regulating valve; 6-filtering device; 61-separating bracket; 621-first filter; 622-second filter; 7-third pipe; and 71-second circulating fan.

### DETAILED DESCRIPTION

The features and exemplary embodiments of various aspects of the present disclosure will be described in detail below. Many specific details are disclosed in the following detailed description in order to fully understand the present disclosure. However, it is obvious to those skilled in the art that the present disclosure can be implemented without some of these specific details. The following description of the embodiments is merely to provide a better understanding of the present disclosure by showing examples of the present disclosure. The present disclosure is by no means limited to any specific configurations proposed below, but covers any modification, replacement and improvement of elements and components without departing from the present disclosure. In the drawings and the following description, well-known structures and technologies are not shown in order to avoid unnecessary obscurity of the present disclosure.

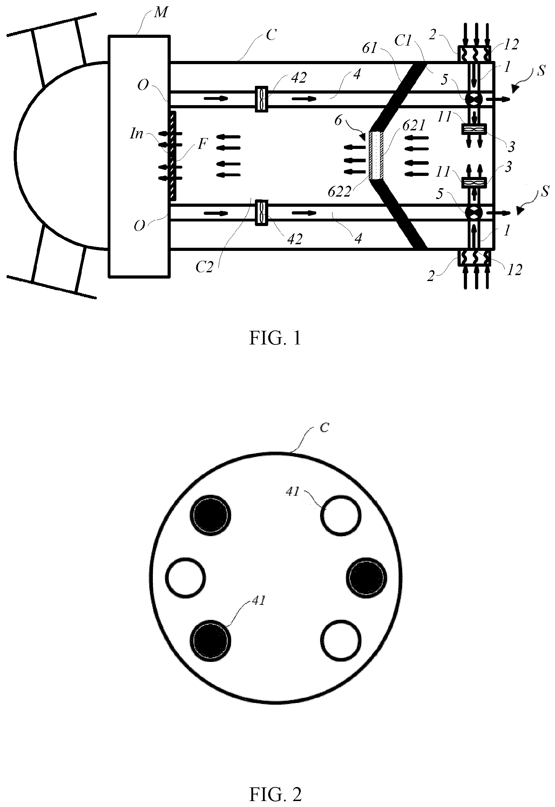

In order to better understand the present application, an air cooling system, a wind turbine generator and a cooling method therefor according to the embodiments of the present application are described below in detail with reference to FIGs. 1 to 7.

Ambient air outside a nacelle C of a wind turbine generator generally has a certain relative humidity, especially for offshore wind turbine generator, the air is high-salt and high-humidity in the offshore environment, and most of salt and water exist in the form of droplet particles, so the external cooling air also needs to be desalted and dehumidified before entering the nacelle C. When the ambient temperature outside the nacelle C is lower than a predetermined temperature, for example, during operation in a cold region in winter, the dehumidification device 2 of the nacelle C usually freezes, blocks access to the nacelle C, and also needs to be deiced since the ambient cooling air is in a humid and cold environment.

With reference to FIG. 1, an embodiment of the present application provides an air cooling system, which is disposed between a nacelle C of a wind turbine generator and an air inlet In of a generator M. The air cooling system includes two or more subsystems S which operate independently. Each of the subsystems S at least includes a dehumidification device 2 and a driving device 3.

The dehumidification device 2 is disposed on a wall of and in communication with the nacelle C. The dehumidification device 2 can be, for example, a gas-liquid separator, which may be disposed on an inner wall or an outer wall of the nacelle C to separate the droplet particles from external cooling air.

The driving device 3 is disposed in the nacelle C to introduce the external cooling air into the nacelle C through the dehumidification device 2. Due to the effect of inertia, most of the droplet particles having diameters of more than 12µm will hit blades of the wind turbine generator and then flow out of the nacelle C; and after removing the droplet particles having large diameters, remaining humid air containing small amount of water and salt is introduced into the nacelle through the dehumidification device 2 by the driving device 3, is mixed with a part of high-temperature air discharged from an air outlet O of the generator M, and exchanges heat with heat-generating components in the nacelle C and/or the generator M after being filterd (a filtering device will be described in detail in the following again).

Optionally, the driving device 3 is a centrifugal fan, which includes a driving motor and fan blades, and the fan blades rotate under the driving action of the driving motor. The heat-generating component in the nacelle C includes, but are not limited to, various electrical devices, gearboxes, and the like, which are determined according to the specific layout structure of the wind turbine generator.

Herein, the driving devices 3 of the two or more subsystems S operate simultaneously, so as to implement a first function on the wind turbine generator; and the driving devices 3 of the two or more subsystems S operate alternately for a predetermined time, respectively, so as to implement a second function on the wind turbine generator.

Optionally, the first function is at least one of cooling, dehumidifying, and desalting the wind turbine generator, and the second function is deicing the dehumidification device 2.

In the air cooling system provided by the present application, the first function may be implemented on the wind turbine generator by disposing the two or more subsystems S, which operate independently, between the nacelle C of the wind turbine generator and the air inlet In of the generator M and making the driving devices 3 of the two or more subsystems S operate simultaneously; and the driving devices 3 of the two or more subsystems S operate alternately for a predetermined time, respectively, so as to implement the second function on the wind turbine generator, thereby making full use of the waste heat of the generator, cooperating the two subsystems S, and expanding the functionality of the air cooling system. In addition, the two or more subsystems S operate independently, and when one subsystem S fails, the operation of the other subsystem S will not be affected, thus improving the fault tolerance and reliability of the air cooling system; and the air cooling system has high cooling efficiency and a simple and compact structure, occupies a small space, has low cost, and is easy to be maintained.

The specific structure of the air cooling system provided by the embodiments of the present application will be further described in detail below with reference to the attached drawings. With reference to FIG. 1 again, the structure of each subsystem S of the air cooling system can be the same, thus omitting the complicated arrangement and simplifying the whole air cooling system. Specifically, the single subsystem S further includes a first pipe 1 and a second pipe 4. The first pipe 1 has a first end 11 located inside the nacelle C and a second end 12 located outside the nacelle C, the driving device 3 is disposed corresponding to the first end 11 of the first pipe 1, and the dehumidification device 2 is disposed on a wall, herein, an inner wall or an outer wall, of the nacelle C corresponding to the second end 12 of the first pipe 1, and preferably on the outer wall of the nacelle C, so all the cooling air entering the nacelle C passes through the dehumidification device 2 and does not occupy internal space of the nacelle C. One end of the second pipe 4 is connected to the air outlet O of the generator M, and the other end of the second pipe 4 extends outside the nacelle C after intersecting with the first pipe to communicate with the external cooling air 1, so as to mix a part of the high-temperature air discharged from the air outlet O of the generator M with the cooling air entering the first pipe 1. Preferably, the driving device 3 is disposed downstream of the intersection of the first pipe 1 and the second pipe 4, and the external cooling air is mixed with the high-temperature exhaust air (the temperature thereof can reach 90 Celsius degrees or larger) of the generator M, thereby increasing the temperature of the external cooling air and reducing the humidity of the external cooling air. Studies have shown that under a certain relative humidity condition, such as under a relative humidity of 74%, salt can exist in the air in a form of liquid salt, so by controlling the relative humidity of the mixed gas to be lower than 74%, and preferably lower than 60%, the liquid salt contained in the mixed air can be dried and solidified and automatically precipitated. By disposing the driving device 3 downstream of the intersection of the first pipe 1 and the second pipe 4, the gas in the first pipe 1 and the second pipe 4 can be better driven and fully mixed, and the control of the relative humidity of the mixed air, the solidification, and the desalination can be realized; and the salt contained in the external air is prevented from corroding the driving device 3 and entering the nacelle C and the generator M. Therefore, by making the mixed air exchange heat with the heat-generating components in the nacelle C and/or the generator M, not only full use of the high-temperature waste gas discharged from the generator M may be made, thereby reducing the energy consumption, but also the external cooling air may be dehumidified and desalted and the heat-generating components in the nacelle C and/or the generator M of the wind turbine generator may be directly cooled. Therefore, the air cooling system adopts the way of being directly cooled by the external cooling air, thereby lowering the cooling temperature, the cooling air enters the first pipe 1 under the action of the respective driving devices 3 of the two or more subsystems S and is mixed with the high-temperature air discharged from the air outlet O of the generator M to the second pipe 4, and then they are jointly merged in the nacelle C, so the cooling efficiency of the wind turbine generator is greatly improved. Since there is no risk of corrosion and leakage, the reliability is also higher than that of the cooling way of liquid cooling or air-liquid integrated cooling, and meanwhile, a complex component such as a liquid cooling pipeline, a pump station, a heat exchanger, and a voltage stabilization system are omitted, the structure is compact, a small space is occupied, it is easy to be maintained, and the manufacturing cost is low.

Further, the air cooling system provided by the embodiment of the present application further includes a temperature sensor and a controller (not shown in the figures) electrically connected with the temperature sensor.

Optionally, the temperature sensor is disposed on the wall of the nacelle C for monitoring the ambient temperature outside the nacelle C. When the external ambient temperature monitored by the temperature sensor is lower than a predetermined temperature, the controller controls the driving devices 3 of the two or more subsystems S to operate alternately for a predetermined time, respectively, so as to deice the dehumidification device 2 of each subsystem S. The predetermined temperature is, for example, 0°C, and the predetermined time is, for example, 10 minutes ~ 30 minutes.

A working principle of deicing is described as below: when the driving device 3 of the first subsystem S is operating, pressure in the nacelle C increases, since the driving devices 3 of the other subsystems S are not turned on, air with a high pressure may spread out through the driving device 3, which does not start, and the first pipe 1 of a second subsystem S, and since the air temperature in the nacelle C is higher than the external ambient temperature, the first pipe 1 and the dehumidification device 2 of the second subsystem S may be deiced.

After operating for a predetermined time, the driving device 3 of the first subsystem S is turned off and then the driving device 3 of the second subsystem S starts, on the same principle, the pressure in the nacelle C increases, the air with a high pressure may spread out through the driving devices 3, which do not start, and the first pipe 1 of the other subsystems S, and since the air temperature in the nacelle C is higher than the external ambient temperature, the first pipe 1 and the dehumidification device 2 of the other subsystems S may be deiced after a predetermined time of operation.

By analogy, the first pipe 1 and the dehumidification device 2 of each of the two or more subsystems S are deiced. After the deicing operation is completed, the first pipes 1 of the two or more subsystems S may be communicated with the external air.

Further, each subsystem S includes a regulating valve 5, which is disposed at the intersection of the first pipe 1 and the second pipe 4 to regulate the flow of the high-temperature air entering the first pipe 1 from the second pipe 4.

The regulating valve 5 is preferably a three-way valve and is communicated with the first pipe 1, the second pipe 4, and the external cooling air, respectively. A part of the high-temperature air discharged from the air outlet O of the generator to the second pipe 4 enters the first pipe 1 through the regulating valve 5, and most of the remaining high-temperature air is discharged out of the nacelle C through the second pipe 4. After being mixed with the air with high salinity and high humidity, the high-temperature air entering the first pipe 1 has an increasing temperature and becomes an unstable mixture of saturated salt solution particles and air, the mixture precipitates salt crystals in a crystalline form under the rotation action of the driving device 3 by controlling the relative humidity of the mixed air to be lower than 74%, and preferably, lower than 60% via the regulating valve 5, most of the salt crystals fall into the storage box (not shown in the figure) of the nacelle C, and the other salt crystals are filtered and removed by the filtering device 6, thereby improving the effect of desalting and dehumidifying the external cooling air.

Further, a first circulating fan 42 is disposed on the second pipe 4 such that the efficiency of mixing the high-temperature air in the second pipe 4 and the humid air in the first pipe 1 and the effect of desalting and dehumidifying on the external cooling air are improved.

Further, each subsystem S further includes a filtering device 6, which divides an internal space of the nacelle C into a first cavity C1 and a second cavity C2, the first pipe 1 and the driving device 3 are located in the first cavity C1, and the filtering device 6 is used to remove dust, salt, and other particles remaining in the mixed air.

Optionally, the filtering device 6 includes a separating bracket 61 and a filtering assembly disposed on the separating bracket 61, and the separating bracket 61 is connected with the wall of the nacelle C and tapers along the air flow direction in the first cavity C1.

During the external cooling air is guided to the nacelle C by the driving devices 3 of the two or more subsystems S, the desalted and dehumidified mixed air continuously collides with the inner wall of the separating bracket 61 to generate resistance, the pressure gradually decreases, and the flow velocity gradually increases, thereby pushing the mixed air into the filtering assembly at a high speed. The separating bracket 61 may have a parabolic or conical surface structure, and, for convenience of manufacture, generally selects the conical surface structure. Further, the filtering assembly includes a first filter 621 disposed near the first cavity C1 and a second filter 622 disposed near the second cavity C2, and a mesh diameter of the second filter 622 is smaller than a mesh diameter of the first filter 621. The first filter 621 is used to remove large particles such as dusts remaining in the air, and the second filter 622 is used to remove remaining salt spray particles have diameters, for example, greater than 5µm to further improve the purity of the mixed air.

The filtered air can directly cool the heating components in the nacelle C, enter the generator M through a filter F, which is used to remove dust and other impurities left in the mixed air, at the air inlet In of the generator M, absorb the heat of the heating components such as the stator winding, stator core, and magnet steel, and then enter the second pipe 4 through the air outlet O, wherein a part of the high-temperature air enters the first pipe 1 to continue the next air cooling cycle, and the other part of the high-temperature air is discharged out of the nacelle C.

With reference to FIG. 2, in order to improve the cooling effect of the generator M, each subsystem S further includes a plurality of sub-pipes 41 which are disposed in the nacelle C and in communication with the outside, the plurality of sub-pipes 41 are disposed downstream of the filtering device 6 of the nacelle C and communicate with the second pipe 4, so as to discharge the high-temperature air generated by the generator M out of the nacelle C through the plurality of sub-pipes 41.

There may be deviations in the manufacturing process of the generator M, which will affect the distribution of the cooling air of the air cooling system in the generator M, and in order to keep the temperature uniformity of the generator M in the circumferential direction, the plurality of sub-pipes 41 of the two subsystems S are alternately distributed in the nacelle C along the circumferential direction. For example, the first subsystem S includes three sub-pipes 41, shown as black pipes in FIG.2, which are disposed in the nacelle C and in communication with the outside, the second subsystem S includes three sub-pipes 41, shown as white pipes in FIG.2, which are disposed in the nacelle C and in communication with the outside, and the six sub-pipes 41 of the two subsystems S are alternately distributed in the nacelle C along the circumferential direction, thereby keeping the uniformity and stability of heat dissipation of the generator M and improving the operation reliability of the generator M.

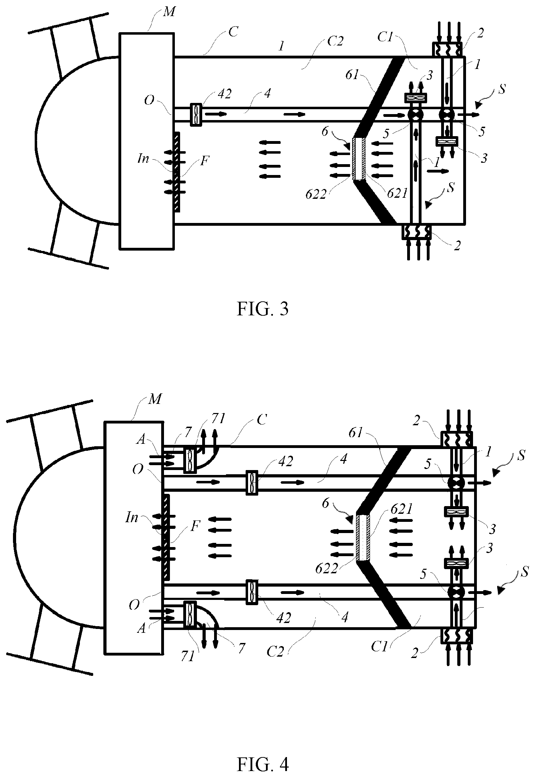

With reference to FIG. 3, an embodiment of the present application also provides an air cooling system, which is similar in structure to the air cooling system shown in FIG. 1 except that the second pipes 4 of the two or more subsystems S are disposed integrally, thereby reducing the number of the second pipes 4 and the first circulating fan 42, lowering the manufacturing cost, reducing the space occupied by the nacelle, and making the layout compact. In this way, the high-temperature air of the generator M in the single second pipe 4 intersects with the first pipes 1 of the two or more subsystems S respectively, is mixed with the external cooling air of the two or more subsystems S entering the nacelle C from the first pipes 1 after being dehumidified and desalted, is filtered, and then enters the nacelle C and the generator M, so as to cool the heating components in the nacelle C and/or the generator M.

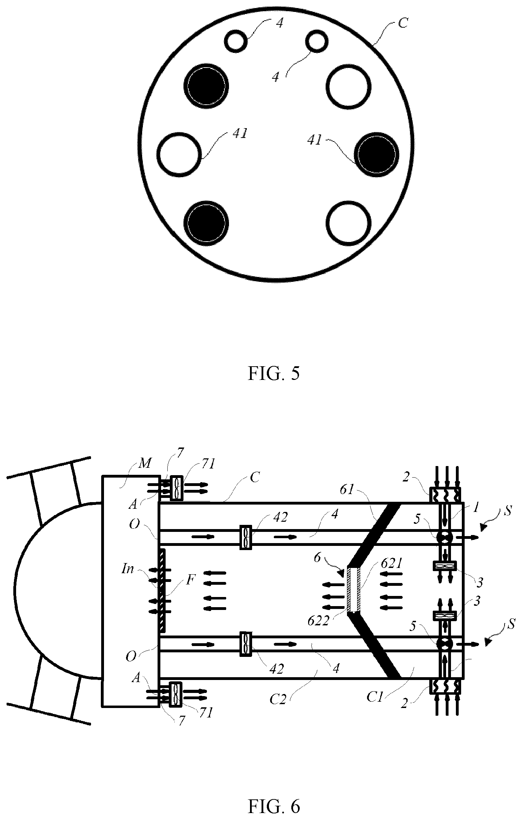

With reference to FIGs. 4 and 5 together, an embodiment of the present application also provides an air cooling system, which is similar in structure to the air cooling system shown in FIG. 1 except that the generator M is further provided with an auxiliary air outlet A, and the air cooling system further includes a third pipe 7, one end of which is connected to the auxiliary air outlet A, and the other end of which is communicated with the outside.

Further, the third pipe 7 is provided with a second circulating fan 71 to improve the discharge efficiency of the third pipe 7.

The auxiliary air outlet A functions to divide the high-temperature air discharged from the air outlet of the generator M into two branches: a part of the high-temperature air in one branch is mixed with the wet and cold air in the first pipe 1 through the second pipe 4, and the other part is discharged out of the nacelle C; and the air in the other branch is directly discharged out of the nacelle C through the third pipe 7. For the air cooling system shown in FIG. 1, the air discharge resistance of the second pipe 4 can be reduced, the requirement for the power of the first circulating fan 42 can be effectively reduced, and the complexity of the air cooling system can be reduced.

Optionally, as shown in FIG. 5, the auxiliary air outlet A of the generator M is disposed in the nacelle C, each subsystem S further includes a plurality of sub-pipes 41 disposed in the nacelle C and in communication with the outside, and the plurality of sub-pipes 41 are communicated with the third pipe 7, so as to discharge the high-temperature air generated by the generator M out of the nacelle C through the sub-pipes 41.

There may be deviations in the manufacturing process of the generator M, which will affect the distribution of the cooling air of the air cooling system in the generator M, and in order to keep the temperature uniformity of the generator M in the circumferential direction, the plurality of sub-pipes 41 of the two or more subsystems S are alternately distributed in the nacelle C along the circumferential direction. By taking the two subsystems S as an example, the first subsystem S includes three sub-pipes 41, shown as black pipes in FIG.2, which are disposed in the nacelle C and in communication with the outside, the second subsystem S includes three sub-pipes 41, shown as white pipes in FIG.2, which are disposed in the nacelle C and in communication with the outside, and the six sub-pipes 41 of the two subsystems S are alternately distributed in the nacelle C along the circumferential direction, thereby ensuring the temperature uniformity of the generator M in the circumferential direction and improving the operation reliability of the generator M.

It can be understood that the structure of each subsystem S of the air cooling system provided by the embodiment of the present application may also be different. For example, one subsystem S includes the first pipe 1, the dehumidification device 2, the driving device 3, the second pipe 4, and the filtering device 6, and the other subsystem S includes the first pipe 1, the dehumidification device 2, the driving device 3, the second pipe 4, and the dehumidification device or other device to realize a different function.

With reference to FIG. 6, an embodiment of the present application also provides an air cooling system, which is similar in structure to the air cooling system shown in FIG. 4 except that the auxiliary air outlet A of the generator M is disposed outside the nacelle C, and the second circulating fan 71 is also located outside the nacelle C, thereby omitting a plurality of sub-pipes 41, reducing the space occupied by the nacelle C, making the layout compact and simple, and lowering the manufacturing cost.

In addition, an embodiment of the present application also provides a wind turbine generator, which includes a generator M, a nacelle C connected with the generator M, and any one of the air cooling system described above, and the air cooling system is disposed between the nacelle C and an air inlet In of the generator M.

As mentioned above, the wind turbine generator is provided with any one of the above-mentioned air cooling systems between the nacelle and the air inlet of the generator, the air cooling system includes the two or more subsystems S operating independently, and when one subsystem S fails, the operation of the other subsystem S may not be affected, thereby improving the fault tolerance and reliability of the air cooling system, making the structure of the air cooling system simple and compact, saving the space occupied by the nacelle C, lowering the cost, and improving the maintainability of the wind turbine generator.

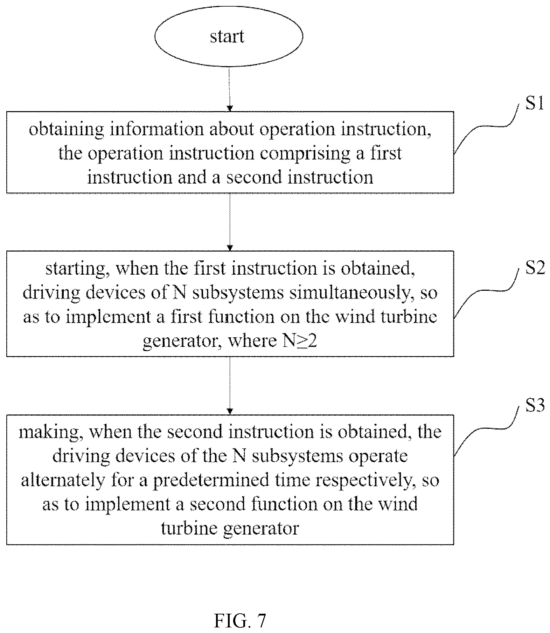

With reference to FIG. 7, an embodiment of the present application also provides a cooling method of the wind turbine generator described above, and the cooling method includes the following steps.

Step S1: obtaining information about operation instruction, the operation instruction including a first instruction and a second instruction.

Step S2: starting, when the first instruction is obtained, the driving devices 3 of N subsystems S simultaneously, where N≥2, so as to implement a first function. Optionally, the first function is at least one of cooling, dehumidifying, and desalting the wind turbine generator.

Step S3: making, when the second instruction is obtained, the driving devices 3 of the N subsystems S operate alternately for a predetermined time, respectively, so as to implement a second function. Optionally, the second function is deicing the dehumidification device 2 and the like.

Implementing the first function in the step S2 includes the following steps.

Step S21: starting the driving devices 3 of the N subsystems S simultaneously, each subsystem S including at least a dehumidification device 2 disposed on a wall of a nacelle C and in communication with the nacelle C and the driving device 3 disposed in the nacelle C.

Step S22: under the action of the driving devices 3 of the N subsystems S, making external cooling air enter the nacelle C through the dehumidification device 2, mix with a part of high-temperature air discharged from an air outlet O of the generator M, and exchange heat with heating components in the nacelle C and/or the generator M.

Implementing the second function in the step S3 includes the following steps.

Step S31: monitoring whether an ambient temperature outside the nacelle C is lower than a predetermined temperature, for example, 0°C.

Step S32: starting, if yes, the driving device 3 of the i^{th} subsystem S in the N subsystems S and operating it for a predetermined time, so as to realize deicing of the dehumidification device 2 of remaining subsystems S in the N subsystems S, where 1≤i<N. The predetermined time may be 10 minutes ~ 30 minutes.

Step S33: turning off the driving device 3 of an i^{th} subsystem S, starting the driving device 3 of the i+1^{th} subsystem S, and operating it for a predetermined time, so as to realize deicing of the dehumidification device 2 of remaining subsystems in the N subsystems S.

It can be understood that if the ambient temperature outside the nacelle C is higher than the predetermined temperature, it is not necessary to deice the dehumidification device 2, and it is only necessary to directly cool the wind turbine generator by air.

According to the received different instructions, the cooling method of the wind turbine generator provided by the embodiments of the present application can realize different functions and expand the functionality of the air cooling system, and especially, when the ambient temperature outside the nacelle C is monitored to be lower than the predetermined temperature, the dehumidification device 2 is deiced first and then the wind turbine generator is cooled by air, thereby improving the cooling effect and service life of the wind turbine generator.

Those skilled in the art should understand that the above-mentioned embodiments are all illustrative and not limited. Different technical features appearing in different embodiments can be combined to achieve beneficial effects. Those skilled in the art should be able to understand and implement other modified embodiments of the disclosed embodiments on the basis of studying the drawings, description, and claims. In the claims, the term "comprising" does not exclude other means or steps; when an article is not modified with a quantitative word, it is intend portioned to include one/kind or multiple/kind of articles, and can be used interchangeably with one/kind or multiple/kind of articles; the terms "first" and "second" are used to denote names rather than to indicate any specific order. Any reference signs in the claims should not be understood as limiting the scope of protection. The functions of multiple parts appearing in the claims can be implemented by a single hardware or software module. The appearance of certain technical features in different dependent claims does not mean that these technical features cannot be combined to achieve beneficial effects, within the scope of the appended claims.

## Claims

1. An air cooling system, for communicating a nacelle (C) of a wind turbine generator with a generator (M), wherein the air cooling system comprises two or more subsystems (S) which operate independently, and each of the subsystems (S) comprises at least:
a dehumidification device (2), disposed on a wall of the nacelle (C) and in communication with the nacelle (C); and
a driving device (3), disposed in the nacelle (C) so that external cooling air is introduced into the nacelle (C) through the dehumidification device (2), is mixed with a part of high-temperature air discharged from an air outlet (O) of the generator (M), and exchanges heat with a heat-generating component in the nacelle (C) and/or the generator (M),
wherein the driving devices (3) of the two or more subsystems (S) operate simultaneously for implementing a first function on the wind turbine generator; and the driving devices (3) of the two or more subsystems (S) operate alternately for a predetermined time respectively for implementing a second function on the wind turbine generator.

2. The air cooling system according to claim 1, wherein the first function is at least one of cooling, dehumidifying, and desalting the wind turbine generator, and the second function is deicing the dehumidification device (2); or
wherein the two or more subsystems (S) have the same structure.

3. The air cooling system according to claim 2, wherein each of the subsystems (S) further comprises:
a first pipe (1), comprising a first end (11) located inside the nacelle (C) and a second end (12) located outside the nacelle (C), wherein the driving device (3) is disposed corresponding to the first end (11) of the first pipe (1), and the dehumidification device (2) is disposed on the wall of the nacelle (C) corresponding to the second end (12) of the first pipe (1); and
a second pipe (4), one end of which is connected to the air outlet (O) of the generator (M), and the other end of which extends outside the nacelle (C) after intersecting with the first pipe (1) to communicate with the external cooling air, so as to mix the part of the high-temperature air discharged from the air outlet (O) of the generator (M) with the cooling air entering the first pipe (1).

4. The air cooling system according to claim 2 or 3, wherein the air cooling system further comprises a temperature sensor and a controller electrically connected with the temperature sensor, and when an external ambient temperature monitored by the temperature sensor is lower than a predetermined temperature, the controller controls the driving devices (3) of the two or more subsystems (S) to operate alternately for the predetermined time respectively, so as to deice the dehumidification device (2) of each of the subsystems (S).

5. The air cooling system according to claim 3, wherein each of the subsystems (S) further comprises a regulating valve (5), which is disposed at an intersection of the first pipe (1) and the second pipe (4) to adjust a flow of the high-temperature air entering the first pipe (1) from the second pipe (4); or
wherein the second pipes (4) of the two or more subsystems (S) are provided separately or integrally; or
wherein each of the subsystems (S) further comprises a filtering device (6), which divides an inner space of the nacelle (C) into a first cavity (C1) and a second cavity (C2), and the first pipe (1) and the driving device (3) are located in the first cavity (C1).

6. The air cooling system according to claim 5, wherein the filtering device (6) comprises a separating bracket (61) and a filtering assembly disposed on the separating bracket (61), and the separating bracket (61) is connected with the wall of the nacelle (C) and tapers along an air flow direction in the first cavity (C1).

7. The air cooling system according to claim 6, wherein the filtering assembly comprises a first filter (621) disposed near the first cavity (C1) and a second filter (622) disposed near the second cavity (C2), and a mesh diameter of the second filter (622) is smaller than a mesh diameter of the first filter (621).

8. The air cooling system according to claim 3, wherein each of the subsystems (S) further comprises a plurality of sub-pipes (41) disposed in the nacelle (C) and in communication with the outside, and the plurality of the sub-pipes (41) is communicated with the second pipe (4) so that the high-temperature air generated by the generator (M) is discharged outside of the nacelle (C) through the plurality of sub-pipes (41).

9. The air cooling system according to claim 1, wherein the air cooling system further comprises a third pipe (7), the generator (M) is further provided with an auxiliary air outlet (A), which is disposed inside or outside the nacelle (C), and one end of the third pipe (7) is connected with the auxiliary air outlet (A), and the other end of the third pipe (7) is communicated with the outside.

10. The air cooling system according to claim 9, wherein the auxiliary air outlet (A) is disposed corresponding to an interior of the nacelle (C);
each subsystem (S) further comprises a plurality of sub-pipes (41) disposed in the nacelle (C) and in communication with the outside, and the plurality of sub-pipes (41) is communicated with the third pipe (7), so that the high-temperature air generated by the generator (M) is discharged out of the nacelle (C) through the plurality of the sub-pipes (41).

11. The air cooling system according to claim 8 or 10, wherein the plurality of sub-pipes (41) of the two or more subsystems (S) are alternately distributed in the nacelle (C) in a circumferential direction.

12. A wind turbine generator, comprising:
a generator (M);
a nacelle (C), connected to the generator (M); and
the air cooling system according to any one of claims 1 to 11.

13. A cooling method for the wind turbine generator according to claim 12, comprising:
obtaining information about operation instruction, the operation instruction comprising a first instruction and a second instruction;
starting, when the first instruction is obtained, driving devices (3) of N subsystems (S) simultaneously, so as to implement a first function on the wind turbine generator, where N≥2; and
making, when the second instruction is obtained, the driving devices (3) of the N subsystems (S) operate alternately for a predetermined time respectively, so as to implement a second function on the wind turbine generator.

14. The cooling method according to claim 13, wherein implementing the first function comprises:
starting the driving devices (3) of the N subsystems (S) simultaneously, each of the subsystems (S) comprising at least a dehumidification device (2) disposed on a wall of a nacelle (C) and in communication with the nacelle (C) and the driving device (3) disposed in the nacelle (C); and
under an action of the driving devices (3) of the N subsystems (S), making external cooling air enter the nacelle (C) through the dehumidification device (2), mix with a part of high-temperature air discharged from an air outlet (O) of the generator (M), and exchange heat with a heat-generating component in the nacelle (C) and/or the generator (M).

15. The cooling method according to claim 13, wherein implementing the second function comprises:
monitoring whether an ambient temperature outside the nacelle (C) is lower than a predetermined temperature;
starting, if yes, the driving device (3) of an i^{th} subsystem (S) in the N subsystems (S) and operating the drive device (3) for a predetermined time, so as to realize deicing of the dehumidification device (2) of remaining subsystems (S) in the N subsystems (S), where 1≤i <N; and
turning off the driving device (3) of the i^{th} subsystem (S), starting the driving device (3) of an i+1^{th} subsystem (S), and operating it for a predetermined time, so as to realize deicing of the dehumidification device (2) of remaining subsystems (S) in the N subsystems (S).

## Patentansprüche

1. Luftkühlsystem zur Verbindung einer Gondel (C) einer Windenergieanlage mit einem Generator (M), wobei das Luftkühlsystem zwei oder mehr unabhängig voneinander arbeitende Teilsysteme (S) umfasst und jedes der Teilsysteme (S) mindestens Folgendes umfasst:
eine Entfeuchtungsvorrichtung (2), die an einer Wand der Gondel (C) angeordnet ist und mit der Gondel (C) in Verbindung steht; und
eine Antriebsvorrichtung (3), die in der Gondel (C) angeordnet ist, sodass externe Kühlluft durch die Entfeuchtungsvorrichtung (2) in die Gondel (C) eingeleitet wird, mit einem Teil der aus einem Luftauslass (O) des Generators (M) abgeführten Hochtemperaturluft vermischt wird und Wärme mit einer wärmeerzeugenden Komponente in der Gondel (C) und/oder dem Generator (M) austauscht,
wobei die Antriebsvorrichtungen (3) der zwei oder mehr Teilsysteme (S) gleichzeitig arbeiten, um eine erste Funktion an der Windenergieanlage auszuführen; und die Antriebsvorrichtungen (3) der zwei oder mehr Teilsysteme (S) jeweils abwechselnd für eine vorbestimmte Zeit arbeiten, um eine zweite Funktion an der Windenergieanlage auszuführen.

2. Luftkühlsystem nach Anspruch 1, wobei die erste Funktion mindestens eine von Kühlung, Entfeuchtung und Entsalzung der Windenergieanlage ist und die zweite Funktion die Enteisung der Entfeuchtungsvorrichtung (2) ist; oder
wobei die zwei oder mehr Teilsysteme (S) die gleiche Struktur aufweisen.

3. Luftkühlsystem nach Anspruch 2, wobei jedes der Teilsysteme (S) ferner Folgendes umfasst:
ein erstes Rohr (1), umfassend ein erstes Ende (11), das sich innerhalb der Gondel (C) befindet, und ein zweites Ende (12), das sich außerhalb der Gondel (C) befindet, wobei die Antriebsvorrichtung (3) entsprechend dem ersten Ende (11) des ersten Rohrs (1) angeordnet ist, und die Entfeuchtungsvorrichtung (2) an der Wand der Gondel (C) entsprechend dem zweiten Ende (12) des ersten Rohrs (1) angeordnet ist; und
ein zweites Rohr (4), dessen eines Ende mit dem Luftauslass (O) des Generators (M) verbunden ist und dessen anderes Ende sich nach dem Kreuzen mit dem ersten Rohr (1) außerhalb der Gondel (C) erstreckt, um mit der externen Kühlluft in Verbindung zu stehen, sodass der Teil der aus dem Luftauslass (O) des Generators (M) abgeführten Hochtemperaturluft mit der in das erste Rohr (1) eintretenden Kühlluft vermischt wird.

4. Luftkühlsystem nach Anspruch 2 oder 3, wobei das Luftkühlsystem ferner einen Temperatursensor und eine mit dem Temperatursensor elektrisch verbundene Steuerung umfasst, und wenn eine von dem Temperatursensor überwachte externe Umgebungstemperatur niedriger als eine vorbestimmte Temperatur ist, die Steuerung die Antriebsvorrichtungen (3) der zwei oder mehr Teilsysteme (S) derart steuert, dass diese jeweils für die vorbestimmte Zeit abwechselnd betrieben werden, um die Entfeuchtungsvorrichtung (2) jedes der Teilsysteme (S) zu enteisen.

5. Luftkühlsystem nach Anspruch 3, wobei jedes der Teilsysteme (S) ferner ein Regelventil (5) umfasst, das an einer Kreuzung des ersten Rohrs (1) und des zweiten Rohrs (4) angeordnet ist, um einen Durchfluss der Hochtemperaturluft einzustellen, die aus dem zweiten Rohr (4) in das erste Rohr (1) eintritt; oder
wobei die zweiten Rohre (4) der zwei oder mehr Teilsysteme (S) separat oder integral bereitgestellt sind; oder
wobei jedes der Teilsysteme (S) ferner eine Filtervorrichtung (6) umfasst, die einen Innenraum der Gondel (C) in einen ersten Hohlraum (C1) und einen zweiten Hohlraum (C2) unterteilt, und das erste Rohr (1) und die Antriebsvorrichtung (3) sich in dem ersten Hohlraum (C1) befinden.

6. Luftkühlsystem nach Anspruch 5, wobei die Filtervorrichtung (6) eine Trennhalterung (61) und eine auf der Trennhalterung (61) angeordnete Filteranordnung umfasst, und die Trennhalterung (61) mit der Wand der Gondel (C) verbunden ist und sich entlang einer Luftströmungsrichtung in dem ersten Hohlraum (C1) verjüngt.

7. Luftkühlsystem nach Anspruch 6, wobei die Filteranordnung einen ersten Filter (621), der in der Nähe des ersten Hohlraums (C1) angeordnet ist, und einen zweiten Filter (622), der in der Nähe des zweiten Hohlraums (C2) angeordnet ist, umfasst, und wobei ein Maschendurchmesser des zweiten Filters (622) kleiner ist als ein Maschendurchmesser des ersten Filters (621).

8. Luftkühlsystem nach Anspruch 3, wobei jedes der Teilsysteme (S) ferner eine Vielzahl von Teilrohren (41) umfasst, die in der Gondel (C) angeordnet sind und mit der Außenseite in Verbindung stehen, und die Vielzahl der Teilrohre (41) mit dem zweiten Rohr (4) in Verbindung steht, sodass die von dem Generator (M) erzeugte Hochtemperaturluft durch die Vielzahl der Teilrohre (41) aus der Gondel (C) nach außen abgeführt wird.

9. Luftkühlsystem nach Anspruch 1, wobei das Luftkühlsystem ferner ein drittes Rohr (7) umfasst, der Generator (M) ferner mit einem Hilfsluftauslass (A) bereitgestellt ist, der innerhalb oder außerhalb der Gondel (C) angeordnet ist, und ein Ende des dritten Rohrs (7) mit dem Hilfsluftauslass (A) verbunden ist, und das andere Ende des dritten Rohrs (7) mit der Außenseite in Verbindung steht.

10. Luftkühlsystem nach Anspruch 9, wobei der Hilfsluftauslass (A) entsprechend einem Innenraum der Gondel (C) angeordnet ist;
wobei jedes Teilsystem (S) ferner eine Vielzahl von in der Gondel (C) angeordneten und mit der Außenseite in Verbindung stehenden Teilrohren (41) umfasst, und die Vielzahl von Teilrohren (41) mit dem dritten Rohr (7) in Verbindung steht, sodass die von dem Generator (M) erzeugte Hochtemperaturluft durch die Vielzahl der Teilrohre (41) aus der Gondel (C) abgeführt wird.

11. Luftkühlsystem nach Anspruch 8 oder 10, wobei die Vielzahl der Teilrohre (41) der zwei oder mehr Teilsysteme (S) abwechselnd in der Gondel (C) in einer Umfangsrichtung angeordnet sind.

12. Windenergieanlage, umfassend:
einen Generator (M);
eine Gondel (C), die mit dem Generator (M) verbunden ist; und
das Luftkühlsystem nach einem der Ansprüche 1 bis 11.

13. Kühlverfahren für die Windenergieanlage nach Anspruch 12, umfassend:
Erhalten von Informationen über eine Betriebsanweisung, wobei die Betriebsanweisung eine erste Anweisung und eine zweite Anweisung umfasst;
wenn die erste Anweisung erhalten wird, gleichzeitiges Starten von Antriebsvorrichtungen (3) von N Teilsystemen (S), um eine erste Funktion an der Windenergieanlage auszuführen, wobei N ≥ 2 ist; und
wenn die zweite Anweisung erhalten wird, bewirken, dass die Antriebsvorrichtungen (3) der N Teilsysteme (S) jeweils abwechselnd für eine vorbestimmte Zeit arbeiten, um eine zweite Funktion an der Windenergieanlage auszuführen.

14. Kühlverfahren nach Anspruch 13, wobei das Ausführen der ersten Funktion Folgendes umfasst:
gleichzeitiges Starten der Antriebsvorrichtungen (3) der N Teilsysteme (S), wobei jedes der Teilsysteme (S) mindestens eine Entfeuchtungsvorrichtung (2) umfasst, die an einer Wand einer Gondel (C) angeordnet ist und mit der Gondel (C) in Verbindung steht, sowie die in der Gondel (C) angeordnete Antriebsvorrichtung (3); und
unter Einwirkung der Antriebsvorrichtungen (3) der N Teilsysteme (S), Bewirken, dass externe Kühlluft durch die Entfeuchtungsvorrichtung (2) in die Gondel (C) eintritt, sich mit einem Teil der aus einem Luftauslass (O) des Generators (M) abgeführten Hochtemperaturluft vermischt und Wärme mit einer wärmeerzeugenden Komponente in der Gondel (C) und/oder dem Generator (M) austauscht.

15. Kühlverfahren nach Anspruch 13, wobei das Ausführen der zweiten Funktion Folgendes umfasst:
Überwachen, ob eine Umgebungstemperatur außerhalb der Gondel (C) niedriger als eine vorbestimmte Temperatur ist;
falls ja, Starten der Antriebsvorrichtung (3) eines i-ten Teilsystems (S) unter den N Teilsystemen (S) und Betreiben der Antriebsvorrichtung (3) für eine vorbestimmte Zeit, um eine Enteisung der Entfeuchtungsvorrichtung (2) der verbleibenden Teilsysteme (S) unter den N Teilsystemen (S) durchzuführen, wobei 1≤i <N; und
Ausschalten der Antriebsvorrichtung (3) des i-ten Teilsystems (S), Starten der Antriebsvorrichtung (3) eines (i+1)-ten Teilsystems (S) und Betreiben derselben für eine vorbestimmte Zeit, um eine Enteisung der Entfeuchtungsvorrichtung (2) der verbleibenden Teilsysteme (S) unter den N Teilsystemen (S) durchzuführen.

## Revendications

1. Système de refroidissement d'air destiné à faire communiquer une nacelle (C) d'un générateur éolien avec un générateur (M), dans lequel le système de refroidissement d'air comprend deux sous-systèmes (S) ou plus qui fonctionnent indépendamment, et chacun des sous-systèmes (S) comprend au moins :
un dispositif de déshumidification (2), disposé sur une paroi de la nacelle (C) et en communication avec la nacelle (C) ; et
un dispositif d'entraînement (3), disposé dans la nacelle (C), de sorte que de l'air de refroidissement externe est introduit dans la nacelle (C) à travers le dispositif de déshumidification (2), est mélangé à une partie d'air à haute température évacué par une sortie d'air (O) du générateur (M), et réalise un échange de chaleur avec un composant générateur de chaleur dans la nacelle (C) et/ou dans le générateur (M),
dans lequel les dispositifs de commande (3) des deux sous-systèmes (S) ou plus fonctionnent simultanément pour mettre en œuvre une première fonction sur le générateur éolien ; et les dispositifs d'entraînement (3) des deux sous-systèmes (S) ou plus fonctionnent alternativement pendant une durée prédéterminée respectivement pour mettre en œuvre une seconde fonction sur le générateur éolien.

2. Système de refroidissement d'air selon la revendication 1, dans lequel la première fonction est au moins l'une parmi le refroidissement, la déshumidification et le dessalage du générateur éolien, et la seconde fonction est le dégivrage du dispositif de déshumidification (2) ; ou
dans lequel les deux sous-systèmes (S) ou plus présentent la même structure.

3. Système de refroidissement d'air selon la revendication 2, dans lequel chacun des sous-systèmes (S) comprend en outre :
un premier tuyau (1), comprenant une première extrémité (11) située à l'intérieur de la nacelle (C) et une seconde extrémité (12) située à l'extérieur de la nacelle (C), dans lequel le dispositif d'entraînement (3) est disposé de manière à correspondre à la première extrémité (11) du premier tuyau (1), et le dispositif de déshumidification (2) est disposé sur la paroi de la nacelle (C) de manière à correspondre à la seconde extrémité (12) du premier tuyau (1) ; et
un deuxième tuyau (4) dont une extrémité est reliée à la sortie d'air (O) du générateur (M) et dont l'autre extrémité s'étend à l'extérieur de la nacelle (C) après avoir croisé le premier tuyau (1) pour communiquer avec l'air de refroidissement externe, de manière à mélanger la partie de l'air à haute température évacué de la sortie d'air (O) du générateur (M) avec l'air de refroidissement qui pénètre dans le premier tuyau (1).

4. Système de refroidissement d'air selon la revendication 2 ou 3, dans lequel le système de refroidissement d'air comprend en outre un capteur de température et un dispositif de commande connecté électriquement au capteur de température, et lorsqu'une température ambiante externe surveillée par le capteur de température est inférieure à une température prédéterminée, le dispositif de commande commande les dispositifs d'entraînement (3) des deux sous-systèmes (S) ou plus pour qu'ils fonctionnent alternativement pendant la durée prédéterminée respectivement, de manière à dégivrer le dispositif de déshumidification (2) de chacun des sous-systèmes (S).

5. Système de refroidissement d'air selon la revendication 3, dans lequel chacun des sous-systèmes (S) comprend en outre une vanne de régulation (5), qui est disposée à une intersection du premier tuyau (1) et du deuxième tuyau (4) pour régler un flux d'air à haute température entrant dans le premier tuyau (1) à partir du deuxième tuyau (4) ; ou
dans lequel les deuxièmes tuyaux (4) des deux sous-systèmes (S) ou plus sont fournis séparément ou intégralement ; ou
dans lequel chacun des sous-systèmes (S) comprend en outre un dispositif de filtrage (6), qui divise un espace interne de la nacelle (C) en une première cavité (Cl) et une seconde cavité (C2), et le premier tuyau (1) et le dispositif d'entraînement (3) sont situés dans la première cavité (Cl).

6. Système de refroidissement d'air selon la revendication 5, dans lequel le dispositif de filtrage (6) comprend un support de séparation (61) et un ensemble de filtrage disposé sur le support de séparation (61), et le support de séparation (61) est relié à la paroi de la nacelle (C) et se rétrécit le long d'une direction d'écoulement de l'air dans la première cavité (C1).

7. Système de refroidissement d'air selon la revendication 6, dans lequel l'ensemble de filtrage comprend un premier filtre (621) disposé près de la première cavité (Cl) et un second filtre (622) disposé près de la seconde cavité (C2), et un diamètre de maille du second filtre (622) est plus petit qu'un diamètre de maille du premier filtre (621).

8. Système de refroidissement d'air selon la revendication 3, dans lequel chacun des sous-systèmes (S) comprend en outre une pluralité de sous-tuyaux (41) disposés dans la nacelle (C) et en communication avec l'extérieur, et la pluralité de sous-tuyaux (41) est en communication avec le deuxième tuyau (4) de sorte que l'air à haute température généré par le générateur (M) est évacué à l'extérieur de la nacelle (C) à travers la pluralité de sous-tuyaux (41).

9. Système de refroidissement d'air selon la revendication 1, dans lequel le système de refroidissement d'air comprend en outre un troisième tuyau (7), le générateur (M) est en outre pourvu d'une sortie d'air auxiliaire (A), qui est disposée à l'intérieur ou à l'extérieur de la nacelle (C), et une extrémité du troisième tuyau (7) est reliée à la sortie d'air auxiliaire (A), et l'autre extrémité du troisième tuyau (7) est en communication avec l'extérieur.

10. Système de refroidissement d'air selon la revendication 9, dans lequel la sortie d'air auxiliaire (A) est disposée de manière à correspondre à l'intérieur de la nacelle (C) ;
chaque sous-système (S) comprend en outre une pluralité de sous-tuyaux (41) disposés dans la nacelle (C) et en communication avec l'extérieur, et la pluralité de sous-tuyaux (41) est en communication avec le troisième tuyau (7), de sorte que l'air à haute température généré par le générateur (M) est évacué hors de la nacelle (C) à travers la pluralité de sous-tuyaux (41).

11. Système de refroidissement d'air selon la revendication 8 ou 10, dans lequel la pluralité de sous-tuyaux (41) des deux sous-systèmes (S) ou plus sont répartis alternativement dans la nacelle (C) dans une direction circonférentielle.

12. Générateur éolien, comprenant :
un générateur (M) ;
une nacelle (C), reliée au générateur (M) ; et
le système de refroidissement d'air selon l'une quelconque des revendications 1 à 11.

13. Procédé de refroidissement du générateur éolien selon la revendication 12, comprenant :
l'obtention d'informations sur l'instruction de fonctionnement, l'instruction de fonctionnement comprenant une première instruction et une seconde instruction ;
le démarrage, lorsque la première instruction est obtenue, de dispositifs d'entraînement (3) de N sous-systèmes (S) simultanément, de manière à mettre en œuvre une première fonction sur le générateur éolien, où N≥2 ; et
le fait d'amener, lorsque la seconde instruction est obtenue, les dispositifs d'entraînement (3) des N sous-systèmes (S) à fonctionner alternativement pendant une durée prédéterminée respectivement, de manière à mettre en œuvre une seconde fonction sur le générateur éolien.

14. Procédé de refroidissement selon la revendication 13, dans lequel la mise en œuvre de la première fonction comprend :
le démarrage des dispositifs d'entraînement (3) des N sous-systèmes (S) simultanément, chacun des sous-systèmes (S) comprenant au moins un dispositif de déshumidification (2) disposé sur une paroi d'une nacelle (C) et en communication avec la nacelle (C) et le dispositif d'entraînement (3) disposé dans la nacelle (C) ; et
sous une action des dispositifs d'entraînement (3) des N sous-systèmes (S), le fait de faire entrer de l'air de refroidissement externe dans la nacelle (C) à travers le dispositif de déshumidification (2), de le mélanger avec une partie d'air à haute température évacué par une sortie d'air (O) du générateur (M), et de réaliser un échange de chaleur avec un composant générateur de chaleur dans la nacelle (C) et/ou le générateur (M).

15. Procédé de refroidissement selon la revendication 13, dans lequel la mise en œuvre de la seconde fonction comprend :
le fait de surveiller si la température ambiante à l'extérieur de la nacelle (C) est inférieure à une température prédéterminée ;
le démarrage, si oui, du dispositif d'entraînement (3) d'un i^{e} sous-système (S) dans les N sous-systèmes (S) et le fait faire fonctionner le dispositif d'entraînement (3) pendant une durée prédéterminée, de manière à réaliser le dégivrage du dispositif de déshumidification (2) des sous-systèmes (S) restants dans les N sous-systèmes (S), où 1≤i <N ; et
l'arrêt du dispositif d'entraînement (3) du i^{e} sous-système (S), le démarrage du dispositif d'entraînement (3) d'un i+1^{e} sous-système (S) et le fait de le faire fonctionner pendant une durée prédéterminée, de manière à réaliser le dégivrage du dispositif de déshumidification (2) des sous-systèmes (S) restants dans les N sous-systèmes (S).
